# EUROPÄISCHE PATENTSCHRIFT

(11) **EP 2 784 243 B1**
(45) Veröffentlichungstag und Bekanntmachung des Hinweises auf die Patenterteilung: **11.08.2021**
(21) Anmeldenummer: 14161290.3
(22) Anmeldetag: 24.03.2014
(51) Int. Cl.: E04F 13/08, E04B 1/76, F16B 13/00

(54) **Verfahren zur Anbringung einer Dämmstoffplatte an ein Mauerwerk**
Method for attaching an insulating panel to masonry
Procédé permettant de monter une plaque d'isolant sur un mur

(30) Priorität: 28.03.2013 DE 102013005360
(43) Veröffentlichungstag der Anmeldung: 01.10.2014
(73) Patentinhaber: RANIT-Befestigungssysteme GmbH, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- EP-A2- 2 213 888
- AT-B- 404 271
- DE-A1-102008 010 606
- DE-U1- 29 618 959
- FR-A1- 2 620 175
- US-A- 4 764 069
- US-A- 4 892 429
- US-A- 5 426 905

## Beschreibung

Die Erfindung betrifft ein Verfahren zur Anbringung einer Dämmstoffplatte an ein Mauerwerk gemäß Oberbegriff von Anspruch 1 unter Verwendung eines Befestigungssystems .

Die Dämmstoffplatten eines Wärmedämmverbundsystems (WDVS) sind beispielsweise Platten aus geschäumtem Polystyrol, die als Träger für eine abschließende Putzschicht dienen.

Zur Befestigung der Dämmstoffplatten an einem tragenden Mauerwerk, wie eine aus Kalksandstein, Betonmaterial oder dergleichen Material errichtete Gebäudewand, sind durch die DE 10 2005 000 147 A1 Befestigungselemente, ausgebildet als Spiralhalteteller, bekannt geworden.

Das Befestigungselement besitzt einen Dübelschaft mit einem Drehaufnahmemittel für ein Setzwerkzeug, wobei der Dübelschaft an einem ersten Ende eine aufweitbare Spreizzone und an dem gegenüberliegenden zweiten Ende einen mit mehrgängigen Wendeln ausgebildeten Druckteller bzw. Spiralhalteteller aufweist. Der wendelartige Gewindegang bzw. die mehrgängige Spirale weist im Verhältnis zum Dübel- bzw. Hohlschaft einen großen Außendurchmesser auf. Beim Einschrauben des Befestigungselementes schneiden sich die großflächigen Wendel des Drucktellers mit ausreichender Tragfähigkeit in die Dämmstoffplatte ein, wobei die aufweitbare Spreizzone des Dübelschafts in ein vorgebohrtes Loch im Untergrund bzw. Mauerwerk eingreift.

Des Weiteren werden zur Anbringung von Dämmstoffplatten an einen Untergrund bzw. ein Mauerwerk gewindelose Halteteller eingesetzt, wie durch die DE 10 2006 006 164 A1 bekannt geworden. Er besteht aus einem Putz-Durchtrittsöffnungen aufweisenden Halte- bzw. Druckteller, der in Montagerichtung durch ein einstückig angeformtes, schaftartiges Hülsenteil verlängert wird. Bei der Montage wird der Halteteller mit seinem Hülsenteil und der eingesteckten Schraube in ein Loch der Dämmstoffplatte eingesetzt, wobei das Gewinde der Schraube in das sich fluchtend anschließende, vorgebohrte Loch im Mauerwerk eingreift. Durch Drehen des Haltetellers, der dazu eine mehrkantige Einschraubwerkzeugaufnahme für z. B. eine Bohrmaschine aufweist, gemeinsam mit der Schraube um die Längsachse wird der Halteteller bis zu seiner Endposition im Dämmstoff eingetrieben und gleichzeitig die Schraube in das Mauerwerk eingeschraubt.

In jedem Fall, sowohl beim Einsatz von Spiralhaltetellern als auch gewindelosen Haltetellern, ist es bei allen bekannten Wärmedämmverbundsystemen (WDVS) mit einem Mauerwerk als tragenden Untergrund erforderlich, zur endgültigen Verankerung des Befestigungssystems im Bohrungsloch des Mauerwerks einen Dübel aufzuspreizen. Der Dübel muss wie im Anwendungsfall mit dem gewindelosen Halteteller separat eingebracht werden oder setzt eine Sonderbauweise voraus, z. B. eine einstückige Ausführung von Dübelschaft und Spiralhalteteller, wie durch die EP 2 213 888 A2 bekannt geworden. Dieser Spiralhalteteller besitzt zudem eine als Stauchbereich dienende Verbindung zwischen dem Dübel und den als Dämmstoffgewinde bezeichneten Wendeln. Der Stauchbereich soll eine Verkürzung des Abstands des Dübels vom Dämmstoffgewinde beim mit dem Einschrauben des Dämmstoffgewindes gleichzeitigem Einschrauben der Schraube ermöglichen.

Ein gattungsgemäßes Befestigungssystem für Dämmstoffplatten ist beispielsweise aus der AT 404 271 B bekannt geworden.

Weiterer Stand der Technik ist aus dem Dokumenten US 4 892 429 A, US4 764 069 A, US 5 426 905 A, DE 296 18 959 U1, FR 2 620 175 A1, EP 2 213 888 A2 und DE 10 2008 010606 A1 bekannt.

Der Erfindung liegt daher die Aufgabe zugrunde, ein Verfahren zur Anbringung einer Dämmstoffplatte unter Verwendung eines geeigneten Befestigungssystems ohne die vorgenannten Nachteile zu schaffen, mit denen sich bei der Befestigung von Dämmstoffplatten an ein Mauerwerk eine vereinfachte und sichere Montage und Verankerung im Mauerwerk erreichen lassen.

Die Aufgabe wird gelöst mit den Merkmalen des Anspruchs 1, vorteilhafte Ausgestaltungen der Erfindung ergeben sich aus den Unteransprüchen.

Die Schraube wird dübellos in dem Mauerwerk verankert, wobei die Schraube mit einem gegenüber dem Durchmesser des vorgebohrten Lochs größeren Außendurchmesser seines Gewindes und in Bezug auf das vorgebohrte Loch zentrisch geführt sich in das Mauerwerk einschneidend eingebracht wird.

Bei dem Befestigungssystem zum Durchführen des Verfahrens weist erfindungsgemäß das Gewinde der Schraube, die vorzugsweise im Übergang vom Schraubenkopf zum Gewindeabschnitt einen zylindrischen Schraubenschaft aufweist, einen größeren Durchmesser als das Loch im Mauerwerk auf und zur lotrechten Führung der sich in das vorgebohrte Loch einschneidenden Schraube ist eine Zentrierung ausgebildet.

Das Gewinde der Durchgangsschraube, die durch den rohrförmigen Schaft des Dämmstoffhalters hindurchgeführt wird, besitzt einen Gewindeflankendurchmesser der größer als der Durchmessers des Lochs im Mauerwerk ist, z.B. 7,3 bis 7,5 mm Gewindeflankendurchmesser gegenüber 6 mm Lochdurchmesser im Mauerwerk, und auch größer ist als der Kerndurchmesser des zylindrischen Schraubenschaftes unterhalb des Schraubenkopfes.

Trotz des größeren Gewindeflanken- bzw. Außendurchmessers der eine hohe Festigkeit aufweisenden, optional gehärteten Schraube, schneidet sich die Schraube problemlos in Beton, Stein oder dergleichen ein und gewährleistet dort auch ohne Dübel eine hohen Längshaltekräften standhaltende, sichere Verankerung, wie Versuche bestätigt haben. Dies im Zusammenspiel mit der lotrechten Zentrierung, die nämlich die dübellose Montage des Dämmstoffhalters komplettiert und auf einfache Weise ermöglicht, dass die den großen Gewindeflankendurchmesser aufweisende Durchgangsschraube zum Einschraubvorgang eine bezogen auf das kleinere Loch im Mauerwerk dennoch stets exakt zentrisch zur Seele bzw. Mittelachse des Dämmstoffhalters stehende Lage einnimmt.

Eine bevorzugte Ausgestaltung der Erfindung sieht vor, dass die Zentrierung aus Durchgangsverengungsmitteln besteht, die in der Durchgangsbohrung des Dämmstoffhalters im Bereich der Schraubendurchführung angeordnet sind. Die Durchgangsverengungsmittel sind vorzugsweise integriert im bzw. mit dem Dämmstoffhalter vorgesehen und vorteilhaft in der Durchgangsbohrung im Bereich der Schraubendurchführung als verengende Rippen oder segmentartige Vorsprünge ausgebildet. Die Rippen bzw. segmentartigen Vorsprünge sind an den Durchmesser des zylindrischen Schraubenschafts angepasst, wodurch sie die Durchgangsschraube zentrieren.

Die Schraubendurchführung des Dämmstoffhalters setzt in der Durchgangsbohrung und diese mit kleinerem Innendurchmesser verlängernd dort an, wo sich bei bis in ihre Endlage eingesetzter und angezogener Durchgangsschraube deren Schraubenkopf befindet bzw. im Dämmstoffhalter anliegt.

Eine für einen gewindelosen Dämmstoffhalter bevorzugte Ausgestaltung der Erfindung sieht eine Zentrierung der Durchgangsschraube vor, bei der die Durchgangsbohrung des Dämmstoffhalters einen zur Aufnahme des Schraubenkopfes im Durchmesser größeren, oberen Kopfschaft und einen in Montagerichtung gesehen vorderen, im Durchmesser kleineren Schaftendabschnitt aufweist, wobei die Durchgangsbohrung über die gesamte Länge des Schaftendabschnitts mit einem an den Durchmesser des Schraubenschafts angepassten Durchmesser ausgebildet ist. Die Schraubendurchführung befindet sich hierbei im Übergang vom oberen Kopfschaft zum Schaftendabschnitt, wobei der Schraubenkopf der bis in ihre Endlage eingesetzten Durchgangsschraube am Anfang des Schaftendabschnitts zur Anlage kommt. Beim Montieren bzw. Eindrehen wird der Schraubenschaft von dem einen komplementären Innendurchmesser aufweisenden Schaftendabschnitt eng umschlossen und die Schraube beim Einsetzen auf die Mittelachse des Lochs im Mauerwerk zentriert geführt.

Optional kann erfindungsgemäß vorgesehen werden, dass die Zentrierung aus an dem zylindrischen Schraubenschaft vorgesehenen, ausgewalzten Rillen besteht. Die ausgewalzten, umlaufenden Rillen, die auch in Form eines Gewindes ausgebildet sein können, erstrecken sich oberhalb des Einschraubgewindes der Durchgangsschraube durchgehend bis zum Schraubenkopf. Die Rillen oder das Gewinde besitzen dabei ein Außenmaß, das mindestens dem Durchmesser des eigentlichen Einschraubgewindes der Durchgangsschraube entspricht.

Da die Dämmstoffhalter aus Kunststoff bestehen, üblich gefertigt durch Spritzgießen, kann das zur Zentrierung im Durchmesser gegenüber dem Schaftendabschnitt und/oder der Schraubendurchführung ggf. sogar etwas größere Gewinde oder können die Rillen der Schraube ohne weiteres die zentrierenden Verengungen passieren, wobei sich eine temporäre Weitung dann selbstständig zurückstellt.

Ferner ist erfindungsgemäß vorgesehen, dass das vorderste, voreilende Ende der Schraube mit einem zur Zentrierung freien Bereich ohne Gewinde ausgebildet ist. Das gewindelose und vorteilhaft konisch verlaufende, vorderste Ende der Durchgangsschraube begünstigt das Einführen bzw. -tauchen des Einschraubgewindes in das Loch des Mauerwerks und wirkt einem verlaufenden Einschneiden entgegen.

Erfindungsgemäß ist vorgesehen, dass die Steigung der Wendel des Spiralhaltetellers nicht größer als die Steigung des Einschraubgewindes der Schraube ist. Das Einschraubgewinde kann hierbei vorteilhaft mit mindestens zwei parallelen Gewindegängen vorgesehen werden, die jeweils eine Steigung wie die Wendel haben. Die Steigung kann z. B. 10 mm oder 8 mm betragen. Gleiche Steigungen sollten insbesondere dann vorliegen, wenn der Spiralhalteteller und die Schraube gleichzeitig angetrieben werden.

Nach einem Vorschlag der Erfindung ist bei einem gewindelosen Halteteller die Steigung des Gewindes der Schraube kleiner als bei einer Schraube für den Spiralhalteteller. Das begünstigt, dass sich der gewindelose Halteteller bündig zur Oberfläche der Dämmstoffplatte montieren lässt.

Weitere Einzelheiten und Merkmale der Erfindung ergeben sich aus den Ansprüchen und der nachfolgenden Beschreibung von in den Figuren dargestellten Ausführungsbeispielen der Erfindung. Es zeigen:
- Fig. 1: eine Gesamtansicht eines Dämmstoffhalters in der Bauweise als Spiralhalteteller mit eingesetzter Schraube;
- Fig. 2a, b: einen Spiralhalterteller mit eingesetzter Schraube und einer ersten Ausführung einer Zentrierung, die an der Schraubendurchführung in Form von Durchmesserverengungsmitteln vorgesehen ist, in einem Längsschnitt (Fig. 2a) und in einem Schnitt (Fig. 2b) entlang der Linie IIb - IIb von Fig. 2a dargestellt;
- Fig. 3a, b: einen Spiralhalteteller mit eingesetzter Schraube und einer weiteren Ausführung einer Zentrierung, die in Form von unterhalb des Schraubenkopfes an dem Schraubenschaft ausgewalzten Rillen ausgebildet ist, in einem Längsschnitt (Fig. 3a) und als Draufsicht (Fig. 3b) dargestellt;
- Fig. 4: in einem Längsschnitt eine Gesamtansicht eines Dämmstoffhalters, der nicht Teil der Erfindung ist, in der Bauweise als gewindeloser Halteteller mit eingesetzter Schraube, deren Schraubenschaft in einem Schaftendabschnitt des Haltetellers geführt ist;
- Fig. 5: den Dämmstoffhalter gemäß Fig. 4 in der Draufsicht dargestellt;
- Fig. 6: eine Gesamtansicht eines Dämmstoffhalters wie gemäß Fig. 1, demgegenüber mit einer eingesetzten Schraube, die am vorderen Ende einen gewindelosen Bereich aufweist;
- Fig. 7: in einem Längsschnitt einen Spiralhalteteller mit einer eingesetzten, einen Vierkantkopf aufweisenden Schraube;
- Fig. 8: den Spiralhalteteller der Fig. 7 in einer Draufsicht; und
- Fig. 9: in einer Teilansicht eine mit einem Spiralhalteteller der Fig. 7 an ein Mauerwerk befestigte Dämmstoffplatte.

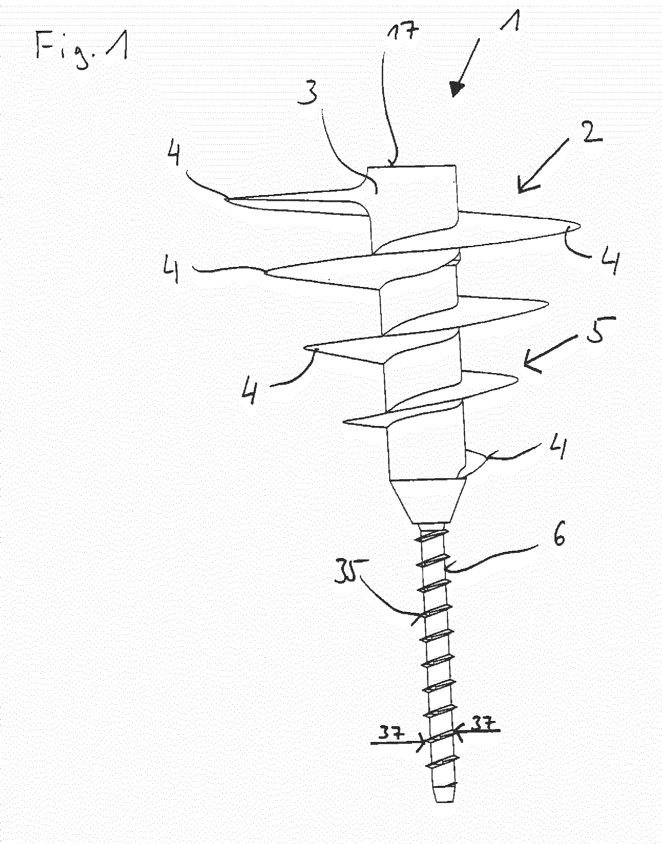

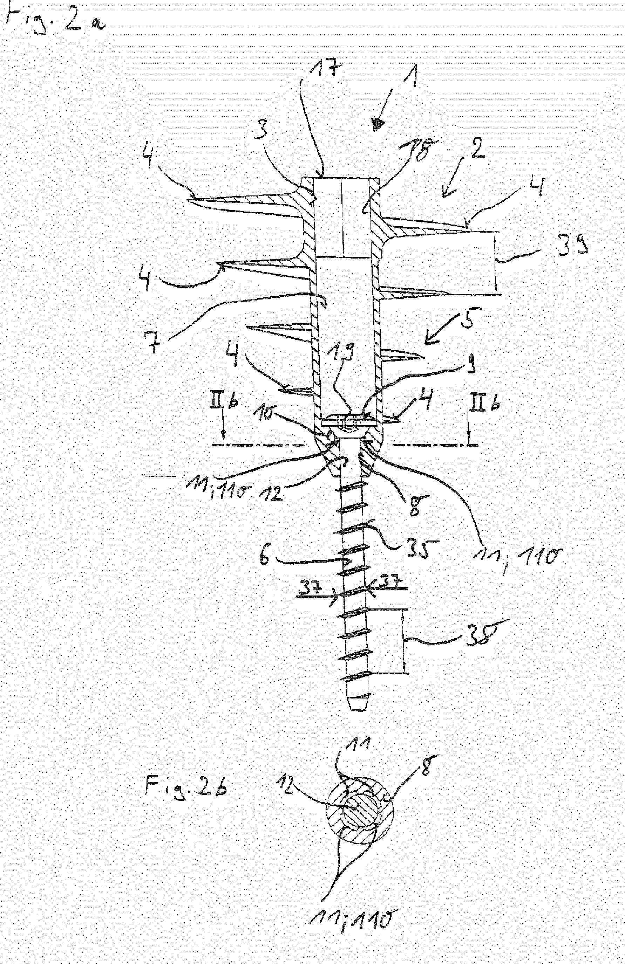

Ein in Fig. 1 gezeigter Dämmstoffhalter 1 in einer Bauweise als Spiralhalteteller 2 zur Befestigung einer Dämmstoffplatte an einem Befestigungsuntergrund, wie einem Mauerwerk, weist einen Halterschaft 3 mit einem aus Wendeln 4 bestehenden Dämmstoffgewinde 5 auf. Der Halterschaft 3 ist zur Aufnahme einer Durchgangsschraube 6 im wesentlichen als zylinderförmiger Hohlkörper 7 ausgebildet (vgl. hierzu Fig. 2a).

Der Halterschaft 3 ist an seinem in Einbringrichtung vorderen Ende mit einer zur Schraubendurchführung dienenden Durchgangsbohrung 8 versehen, die mit kleinerem Durchmesser dort ansetzt, wo sich bei ihre Endlage einnehmender Durchgangsschraube 6 deren hier runder Senk-Schraubenkopf 9 in einer konischen Vertiefung 10 anlegt (vgl. hierzu Fig. 2a).

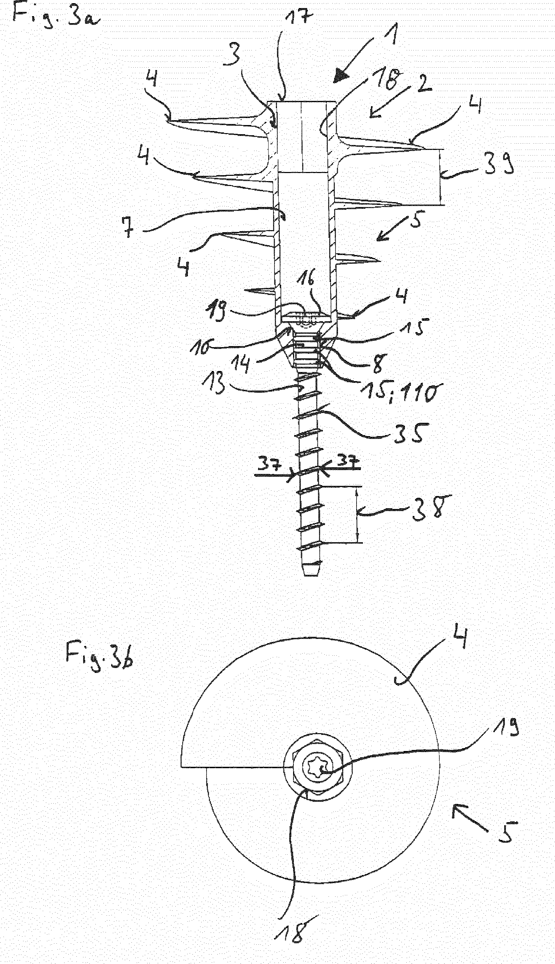

Zur Zentrierung der Durchgangsschraube 6 sind im Dämmstoffhalter 1 im Übergangsbereich zwischen der konischen Vertiefung 10 und der Durchgangsbohrung 8 segmentartige Vorsprünge 11 als Durchgangsverengungsmittel integriert, die an den Außenumfang eines zylindrischen Schraubenschafts 12 angreifen und somit die Durchgangsschraube 6 zentrieren (vgl. hierzu Fig. 2b). Der Dämmstoffhalter 1 mit der so zentrierten Schraube 6 lässt sich dann, wie so auch bei den Varianten nach den Fig. 3a, 3b sowie 4, 5 und 6, mittels eines Drehwerkzeugs durch Eindrehen der Schraube 6 unter rotierender Mitnahme des Dämmstoffhalters 1 in den Dämmstoff bzw. das Loch im Mauerwerk einbringen, wobei zur gemeinsamen Drehbeaufschlagung von Dämmstoffhalter und Schraube ein Drehwerkzeug bzw. Schraubbit zum Einsatz kommt, das bzw. der gleichzeitig die Schraube und den dazu, wie in den Fig. 2a, 3a und 4 zu erkennen ist, einen von der Kopfseite 17 ausgehenden Innensechskant 18 aufweisenden Halteteller drehen kann.

Bei dem in den Fig. 3a und 3b gezeigten Dämmstoffhalter 1 ist eine Durchgangsschraube 13 zur Zentrierung innerhalb der Durchgangsbohrung 8 an ihrem Schraubenschaft 14 mit ausgewalzten Rillen 15, optional einem Gewinde ausgebildet. Sobald die Durchgangsschraube 13 durch Anlage ihres wiederum runden ihres Senk-Schraubenkopfes 16 in der konischen Vertiefung 10 ihre Endlage innerhalb des Halterschafts 3 erreicht hat, liegen die Rillen 15 mit festem Sitz an der Durchgangsbohrung 8 an, wodurch die Durchgangsschraube 13 bezogen auf die Mittelachse des Dämmstoffhalters 1 und des sich im Mauerwerk anschließenden Lochs exakt zentriert ist.

Zum gleichzeitigen Eindrehen des Dämmstoffhalters 1 mit den Wendeln 4 und den Schrauben 6 bzw. 13 in die Dämmstoffplatte weist der Dämmstoffhalter 1 auf seiner Kopfseite 17 den Innensechskant 18 zur Aufnahme eines entsprechenden Drehwerkzeugs auf, während die runden Senk-Schraubenköpfe 9 und 16 der Durchgangsschrauben 6 und 13 zum Einschrauben in das vorgebohrte Loch im Mauerwerk mit einem Innen-Torx 19 zur Aufnahme eines mit einem Außen-Torx bestückten Drehwerkzeugs ausgebildet sind.

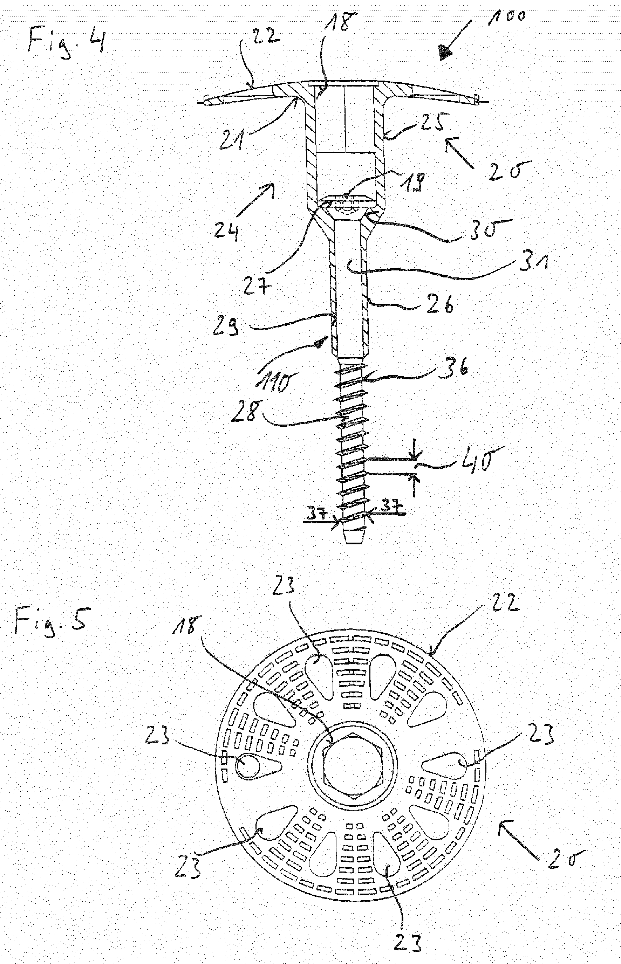

In den Fig. 4 und 5 ist ein Dämmstoffhalter 100 in einer Bauweise als gewindeloser Halteteller 20 dargestellt. Am oberen Ende 21 ist der Halteteller 20 mit einer Druckplatte 22 ausgebildet, die beim Festlegen der Dämmstoffplatte an dem Mauerwerk bündig mit der Oberfläche der Dämmstoffplatte abschließt oder vertieft in dieser versenkt wird. Weiterhin ist die Druckplatte 22 mit Putz-Durchtrittsöffnungen 23 versehen. Bei versenktem Halteteller wird das Senkloch vor dem Verputzen durch eine Rondelle verschlossen.

An der Druckplatte 22 ist einstückig ein Hülsenteil 24 mit einem oberen, einen großen Durchmesser sowie den Innensechskant 18 aufweisenden Kopfschaft 25 und einem unteren, einen kleineren Durchmesser aufweisenden Schaftendabschnitt 26 angeformt. Während der obere Kopfschaft 25 zur Aufnahme eines ebenfalls wieder einen Innen-Torx 19 für ein Drehwerkzeug besitzenden runden Senk-Schraubenkopfes 27 einer Durchgangsschraube 28 dient, ist der untere Schaftendabschnitt 26 als Durchgangsbohrung 29 zur Schraubendurchführung ausgebildet.

Wenn die Durchgangsschraube 28 ihre Endlage innerhalb des gewindelosen Haltetellers 20 eingenommen hat, wobei der Senk-Schraubenkopf 27 an einer konischen Vertiefung 30 im Übergangsbereich zwischen Kopfschaft 25 und Schaftendabschnitt 26 anliegt, wird ein zylindrischer Schraubenschaft 31 über seine gesamte Länge von dem Schaftendabschnitt 26 bzw. der Durchgangsbohrung 29 eng umschlossen und die Durchgangsschraube 28 somit beim Einsetzen auf die Mittelachse des Lochs im Mauerwerk über die damit erreichte Zentrierung 110 exakt zentriert geführt.

Bei dem gewindelosen Dämmstoffhalter 100 der Fig. 4 und 5 muss sich der Halteteller 20 nicht unbedingt drehen. Dies allerdings dann, wenn er für eine versenkte Montage benutzt wird. Damit sich zur versenkten bzw. -tieften Montage der Halteteller 20 mit seinem scharfen Tellerrand besser in den Dämmstoff einschneidet, empfiehlt sich eine geringere Gewindesteigerung, etwa < 8mm, der Schraube. Denn je mehr Umdrehungen die Schraube macht, umso besser schneidet sich der Tellerrand in sein Senkloch.

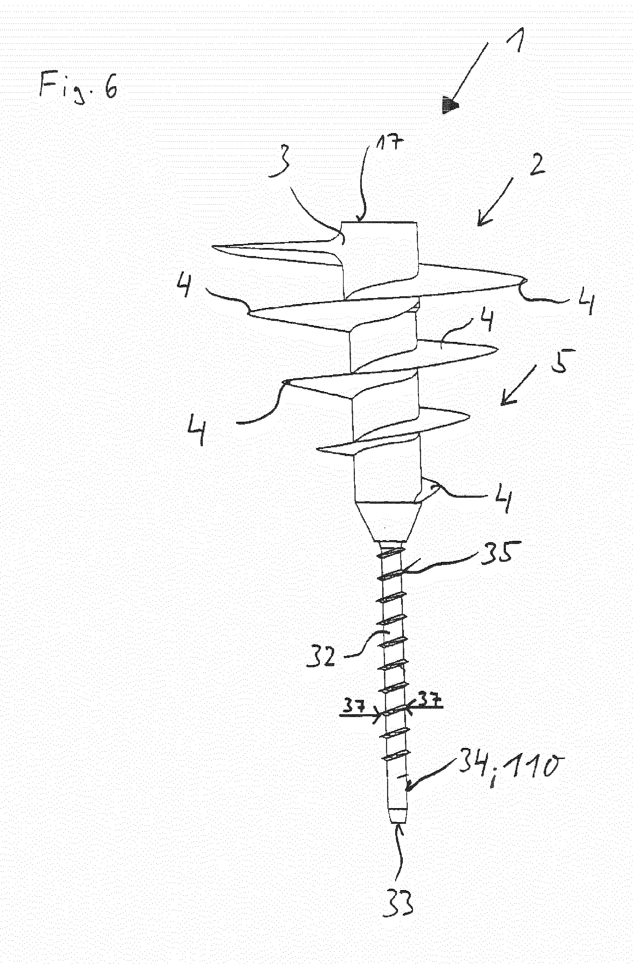

Ergänzend zu den in den Fig. 1 bis 5 gezeigten und beschriebenen Zentriervarianten ist in der Fig. 6 eine weitere, ggf. zusätzliche Zentrierung mittels einer Durchgangsschraube 32 dargestellt.

In diesem Fall ist die Durchgangsschraube 32 an ihrem voreilenden, vorderen Ende einerseits mit einer konischen Zentrierspitze 33 und andererseits dieser vorgelagert einem zur Zentrierung gewindelosen Bereich 34 ausgebildet. Dies begünstigt das Einführen bzw. -tauchen der Schraube 32 in das Loch des Mauerwerks und wirkt einem verlaufenden Einschneiden entgegen.

Bei allen vorgenannten Durchgangsschrauben 6, 13, 28 und 32 weisen deren Einschraubgewinde 35, 36 einen größeren Gewindeflankendurchmesser 37 als das vorgebohrte Loch im Mauerwerk auf. Der größere Gewindeflankendurchmesser 37 der Einschraubgewinde 35, 36 und deren Zentrierung 110 ermöglichen, dass die Durchgangsschrauben 6, 13, 28 und 32 sich problemlos in das Mauerwerk schneiden und dort ohne Dübel eine sichere Verankerung gewährleisten.

Bei den Durchgangschrauben 6, 13 und 32 des mit einem Spiralhalteteller 2 ausgebildeten Dämmstoffhalters 1 entspricht die Steigung 38 des Einschraubgewindes 35 der Steigung 39 der Wendel 4. Bei der Durchgangsschraube 28 des Dämmstoffhalters 100 mit dem gewindelosen Halteteller 20 ist die Steigung 40 des Einschraubgewindes 36 kleiner als die Steigung 38 bei dem Einschraubgewinde 35 der Durchgangsschrauben 6, 13 und 32 (vgl. die Fig. 2 a und Fig. 4).

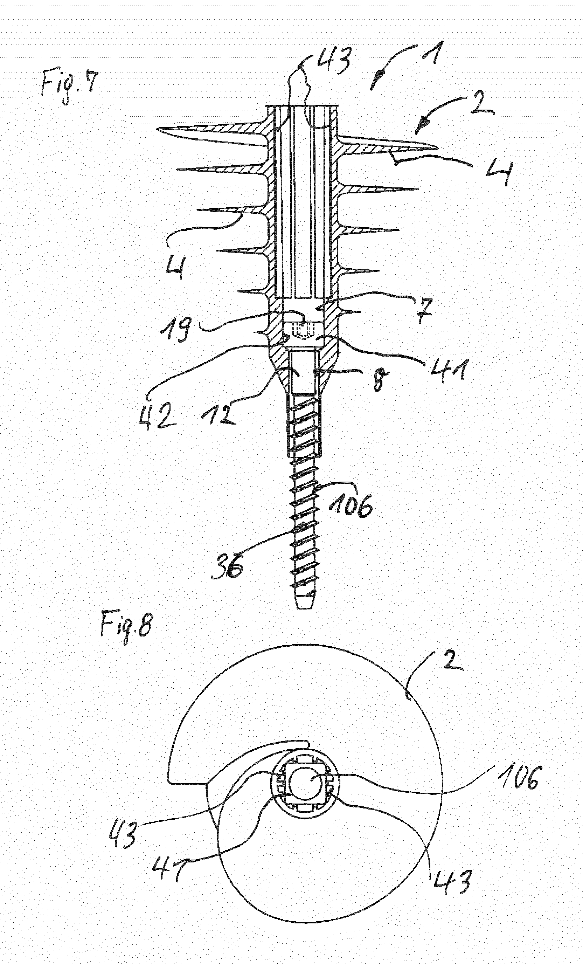

In dem Ausführungsbeispiel nach den Fig. 7 und 8 ist der Spiralhalteteller 2 des Dämmstoffhalters 1 zur Aufnahme einer einen Mehrkantkopf 41 aufweisenden Durchgangsschraube 106 ausgebildet. Der Dämmstoffhalter 1 benötigt keinen Innensechskant 18. Es wird über den Innen-Torx 19 des Mehrkantkopfes 41 nur die Schraube 106 angetrieben, deren Mehrkantkopf 41 von einem Mehr- bzw. Vierkantpasssitz 42 am unteren Ende des Hohlkörpers 7 im Übergang zur Durchgangsbohrung bzw. Schraubendurchführung aufgenommen wird und den Spiralhalteteller 2 somit mitdreht. Zum genauen Einsetzen der Durchgangsschraube 106 in den Spiralhalteteller 2 sind in dem Hohlkörper 7 Führungsrillen 43 vorgesehen.

Auch der gewindelose Spiralhalteteller 20 der Fig. 4 und 5 kann optional mit einer Mehrkantschraube bestückt werden. Für deren Mehrkantkopf muss dann, damit der Halteteller sich mitdrehen kann, statt einer konischen Vertiefung ebenfalls ein Mehrkant-Passsitz vorgesehen werden.

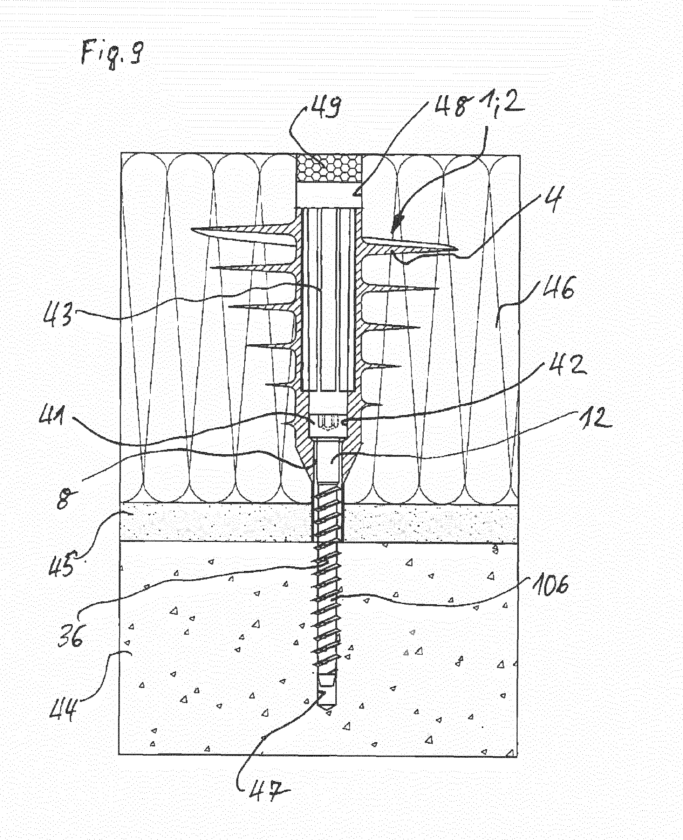

Die Fig. 9 zeigt den Einbauzustand einer mit einem Dämmstoffhalter 1 der Fig. 7 und 8 an einem Mauerwerk 44 unter Zwischenschaltung einer Kleberschicht 45 befestigten Dämmstoffplatte 46. An ein durch die Dämmstoffplatte 46 und die Klebeschicht 45 bis in das Mauerwerk 44 vorgebohrtes Bohrloch 47 ist der Spiralhalteteller 2 mit der zuvor eingeführten Durchgangsschraube 106 angesetzt worden und hat sich durch Drehbeaufschlagung über den Mehrkantkopf 41 in die Dämmstoffplatte 46 eingeschnitten, wobei sich die zentrisch geführte Durchgangsschraube 106 mit ihrem einen größeren Durchmesser als das Bohrloch 47 aufweisenden Einschraubgewinde 36 in dem Mauerwerk 44 dübellos verankert hat. Das über dem Spiralhalteteller 2 in dem Dämmstoff verbleibende Senkloch 48 wird durch eine Rondelle bzw. Stopfen 49 verschlossen, worauf sich das Verputzen anschließen kann.

### Bezugszeichenliste:

- 1, 100: Dämmstoffhalter
- 2: Spiralhalteteller
- 3: Hohlschaft
- 4: mehrgängige Spirale / Wendel
- 5: Dämmstoffgewinde
- 6: Durchgangsschraube / Rundkopfschraube
- 7: zylinderförmiger Hohlkörper
- 8: Durchgangsbohrung / Schraubendurchführung
- 9: Senk-Schraubenkopf (rund)
- 10: konische Vertiefung
- 11: Durchmesserverengungsmittel (segmentartige Vorsprünge oder Rippen als Zentrierung
- 12: zylindrischer Schraubenübergangsschaft
- 13: Durchgangsschraube / Rundkopfschraube
- 14: Schraubenschaft
- 15: ausgewalzte Rillen (als Zentrierung)
- 16: Senk-Schraubenkopf (rund)
- 17: Kopfseite
- 18: Innensechskant
- 19: Innen-Torx
- 20: gewindeloser Halteteller
- 21: obere Ende
- 22: Druckplatte
- 23: Putz-Durchtrittsöffnungen
- 24: Hülsenteil
- 25: Kopfschaft
- 26: Schaftendabschnitt
- 27: Senk-Schraubenkopf (rund)
- 28: Durchgangsschraube / Rundkopfschraube
- 29: Durchgangsbohrung
- 30: konische Vertiefung
- 31: Schraubenschaft
- 32: Durchgangsschraube
- 33: konische Zentrierspritze
- 34: gewindeloser Bereich (als Zentrierung)
- 35: Einschraubgewinde
- 36: Einschraubgewinde
- 37: Gewindeflankendurchmesser
- 38: Steigung
- 39: Steigung
- 40: Steigung
- 41: Mehrkantkopf (4-kant)
- 42: Mehr- bzw. Vierkantpassitz
- 43: Führungsrille
- 44: Mauerwerk
- 45: Klebeschicht
- 46: Dämmstoffplatte
- 47: Bohrloch
- 48: Senkloch
- 49: Rondelle / Stopfen
- 106: Durchgangsschraube
- 110: Zentrierung

## Patentansprüche

1. Verfahren zur Anbringung einer Dämmstoffplatte (46) an ein Mauerwerk (44) mittels eines Befestigungssystems, umfassend einen als Spiralhalteteller (2) ausgebildeten Dämmstoffhalter (1; 100) und eine Schraube (6, 13, 28, 32), die über eine zentrische Durchgangsbohrung des Dämmstoffhalters bis in ein vorgebohrtes Loch (47) im Mauerwerk (44) einführbar und in dem Mauerwerk (44) verankerbar ist, wobei der Dämmstoffhalter (1; 100) sich mit einer Wendel (4) durch Eindrehen der Schraube (6, 13, 32), unter rotierender Mitnahme des Dämmstoffhalters völlig in die Dämmstoffplatte (46) einschraubt und die Dämmstoffplatte am Mauerwerk (44) hält, wobei die Schraube (6, 13, 32, 106) dübellos in dem Mauerwerk (44) verankert wird, die Schraube (6, 13, 32, 106) mit einem gegenüber dem Durchmesser des vorgebohrten Lochs (47) größeren Außendurchmesser ihres Gewindes (35, 36) und in Bezug auf das vorgebohrte Loch (47) zentrisch geführt sich in das Mauerwerk einschneidend eingebracht wird, wobei das Verfahren unter Verwendung eines Befestigungssystems durchgeführt wird, bei dem Befestigungssystem zur lotrechten Führung der sich in das vorgebohrte Loch einschneidenden Schraube (6, 13,, 32, 106) eine Zentrierung (110) ausgebildet ist und dass eine Steigung (39) der Wendel (4) des Spiralhaltetellers (2) einer Steigung (38) des Gewindes (35) der Schraube (6, 13, 32) entspricht.

2. Verfahren nach Anspruch 1, **dadurch gekennzeichnet, dass** die Schraube (6, 13, 28, 32, 106) im Übergang vom Schraubenkopf (9, 16, 27, 42) zum Gewindeabschnitt einen zylindrischen Schraubenschaft (12, 14, 31) aufweist.

3. Verfahren nach Anspruch 1,
**dadurch gekennzeichnet, dass** die Zentrierung (110) aus Durchmesserverengungsmitteln (11) besteht, die in einer Durchgangsbohrung (8) als Schraubendurchführung des Dämmstoffhalters (1) angeordnet sind.

4. Verfahren nach Anspruch 3,
**dadurch gekennzeichnet, dass** die Durchmesserverengungsmittel (11) als in die Durchgangsbohrung (8) hineinragende segmentartige Vorsprünge ausgebildet sind.

5. Verfahren nach Anspruch 3,
**dadurch gekennzeichnet, dass** die Durchmesserverengungsmittel (11) als in die Durchgangsbohrung (8) hineinragende Rippen ausgebildet sind.

6. Verfahren nach Anspruch 1 oder 2,
**dadurch gekennzeichnet, dass** die Zentrierung (110) aus an dem zylindrischen Schraubenschaft (14) vorgesehenen, ausgewalzten Rillen (15) besteht.

7. Verfahren nach Anspruch 1 oder 2,
**dadurch gekennzeichnet, dass** die Zentrierung (110) aus einem an den zylindrischen Schraubenschaft (14) ausgebildeten Gewinde besteht.

8. Verfahren nach einem der Ansprüche 1 bis 7,
**dadurch gekennzeichnet, dass** das vorderste, voreilende Ende (33) der Schraube (32) mit einem als Zentrierung (110) gewindelosen Bereich (34) ausgebildet ist.

## Claims

1. Method for attaching an insulating panel (46) to masonry (44) by means of a fastening system, comprising an insulation fastener (1; 100) designed as a spiral retaining plate (2), and a screw (6, 13, 28, 32) which can be introduced into the masonry (44) via a central through-hole in the insulation fastener and farther into a predrilled hole (47) in the masonry (44) and can be anchored in the masonry (44), wherein the insulation fastener (1; 100) with its spiral (4) is screwed completely into the insulating panel by turning in the screw (6, 13, 32), causing the insulation fastener to rotate with it, and holds the insulating panel against the masonry (44), wherein the screw (6, 13, 32, 106) is anchored in the masonry (44) without a dowel, the screw, of which the thread (35, 36) has a larger outer diameter than the diameter of the predrilled hole (47), is guided centrally relative to the predrilled hole (47) and introduced by cutting into the masonry, wherein the method is performed using a fastening system, a centring arrangement (110) is formed on the fastening system for guiding the screw (6, 13, 32, 106) perpendicularly into the predrilled hole by cutting, and that a pitch (39) of the spiral (4) of the spiral retaining plate (2) corresponds to a pitch (38) of the thread (35) of the screw (6, 13, 32).

2. Method according to Claim 1, **characterized in that** the screw (6, 13, 28, 32, 106) has a cylindrical screw shaft (12, 14, 31) in the transition region between the screw head (9, 16, 27, 42) and the thread section.

3. Method according to Claim 1,
**characterized in that** the centring arrangement (110) consists of diameter constriction means (11) which are arranged in a through-hole (8) as a screw passthrough in the insulation fastener (1).

4. Method according to Claim 3,
**characterized in that** the diameter constriction means (11) are designed as segment-like projections which protrude into the through-hole (8).

5. Method according to Claim 3,
**characterized in that** the diameter constriction means (11) are designed as ribs which protrude into the through-hole (8).

6. Method according to Claim 1 or 2,
**characterized in that** the centring arrangement (110) consists of rolled out grooves (15) provided on the cylindrical screw shaft (14).

7. Method according to Claim 1 or 2,
**characterized in that** the centring arrangement (110) consists of a thread formed on the cylindrical screw shaft (14).

8. Method according to any one of Claims 1 to 7,
**characterized in that** the foremost, leading end (33) of the screw (32) is formed with a non-threaded region (34) as the centring arrangement (110).

## Revendications

1. Procédé, destiné à monter un panneau isolant (46) sur une maçonnerie (44) au moyen d'un système de fixation, comprenant un support d'isolant (1 ; 100) conçu sous la forme d'une rondelle de maintien hélicoïdale (2) et une vis (6, 13, 28, 32), qui par l'intermédiaire d'un perçage traversant centré du support d'isolant est susceptible d'être introduite dans un trou (47) pré-percé dans la maçonnerie (44) et d'être ancrée dans la maçonnerie (44), le support d'isolant (1 ; 100) se vissant complètement dans le panneau isolant (46) à l'aide d'une hélice (4) en faisant pénétrer en rotation la vis (6, 13, 32), en entrainant en rotation le support d'isolant et en maintenant le panneau isolant sur la maçonnerie (44), la vis (6, 13, 32, 106) étant ancrée sans cheville dans la maçonnerie (44), la vis (6, 13, 32, 106) étant introduite par autotaraudage dans la maçonnerie par un diamètre extérieur de son filetage (35, 36) qui est supérieur au diamètre du trou (47) pré-percé et en étant guidée de manière centrée par rapport au trou (47) pré-percé, le procédé étant réalisé en utilisant un système de fixation, sur le système de fixation, un centrage (110) se créant pour le guidage perpendiculaire de la vis (6, 13 32, 106) qui s'autotaraude dans le trou pré-percé et une inclinaison (39) de l'hélice (4) de la rondelle de maintien hélicoïdale (2) correspondant à une inclinaison (38) du filetage (35) de la vis (6, 13, 32).

2. Procédé selon la revendication 1, **caractérisé en ce qu'**au passage de la tête de vis (9, 16, 27, 42) vers le tronçon fileté, la vis (6, 13, 28, 32, 106) comporte une tige de vis (12, 14, 31) cylindrique.

3. Procédé selon la revendication 1,
**caractérisé en ce que** le centrage (110) consiste dans des moyens rétrécisseurs de diamètre (11) qui sont placés dans un perçage traversant (8) en tant que passage de vis du support d'isolant (1).

4. Procédé selon la revendication 3,
**caractérisé en ce que** les moyens rétrécisseurs de diamètre (11) sont conçus sous la forme de saillies en segments saillant dans le perçage traversant (8).

5. Procédé selon la revendication 3,
**caractérisé en ce que** les moyens rétrécisseurs de diamètre (11) sont conçus sous la forme de nervures saillant dans le perçage traversant (8).

6. Procédé selon la revendication 1 ou 2,
**caractérisé en ce que** le centrage (110) consiste dans des cannelures (15) laminées, prévus sur la tige de vis (14) cylindrique.

7. Procédé selon la revendication 1 ou 2,
**caractérisé en ce que** le centrage (110) consiste dans un filetage conçu sur la tige de vis (14) cylindrique.

8. Procédé selon l'une quelconque des revendications 1 à 7,
**caractérisé en ce que** l'extrémité (33) antérieure extrême de la vis (32) est conçue avec une zone (34) non filetée en tant que centrage (110).
